# EUROPÄISCHE PATENTSCHRIFT

(11) **EP 1 759 949 B1**
(45) Veröffentlichungstag und Bekanntmachung des Hinweises auf die Patenterteilung: **11.11.2009**
(21) Anmeldenummer: 06017386.1
(22) Anmeldetag: 22.08.2006
(51) Int. Cl.: B60T 11/10, B60T 13/16

(54) **Anhängerbremsventil**
Trailer brake valve
Soupape de freinage pour un remorque

(30) Priorität: 31.08.2005 DE 102005041251
(43) Veröffentlichungstag der Anmeldung: 07.03.2007
(73) Patentinhaber: Bosch Rexroth Aktiengesellschaft, 70184 Stuttgart (DE)
(72) Erfinder: Lödige, Heinrich, 71665 Vaihingen (DE); Rusbült, Rene, 71701 Schwieberdingen (DE)

(56) Entgegenhaltungen:
- EP-A- 1 538 044
- DE-A1- 19 514 733
- DE-A1- 19 857 355

## Beschreibung

Die Erfindung betrifft ein Anhängerbremsventil gemäß dem Oberbegriff des Patentanspruchs 1

Das erfindungsgemäße Anhängerbremsventil kann prinzipiell bei einer Vielzahl hydraulischer Fremdkraftbremsen, beispielsweise für eine Fremdkraftbremse eines Zugfahrzeuges, einer selbstfahrenden Arbeitsmaschine oder eines Sonderfahrzeuges eingesetzt werden. Das Hauptanwendungsgebiet des Anhängerbremsventils dürfte jedoch bei hydraulischen Bremssystemen für die Abbremsung von schweren Anhängern an landwirtschaftlichen Zugfahrzeugen, beispielsweise Ackerschleppern liegen.

Aus der EP 1 538 044 ist eine Ventilanordnung einschließlich eines hydraulischen Anhängerbremsventils bekannt, das einen Pumpenanschluss, einen Rücklaufanschluss und einen Bremsanschluß aufweist, der mit den beiden anderen Anschlüssen verbunden werden kann. Der sich in einer ersten Ventilbohrung eines Ventilgehäuses befindliche Ventilschieber des Anhängerbremsventils dieses Ventils ist in Richtung Erhöhung des Bremsdrucks von einem Steuerdruck, der von einem und von einer elektronischen Steuereinheit ansteuerbaren Proportionalmagneten verstellbaren Druckregelventil erzeugt wird, und in Richtung Verringerung des Bremsdrucks vom Bremsdruck beaufschlagbar. In die Generierung des Ansteuersignals für den Proportionalmagneten geht können neben dem Zugfahrzeugbremsdruck auch weitere Parameter eingehen. In einer zweiten Ventilbohrung des Ventilgehäuses befindet sich der Ventilschieber eines Prioritätsventils, das einen Pumpenanschluss und einen Verbraucheranschluss aufweist. Der Ventilschieber des Prioritätsventils wird im Sinne einer Vergrößerung des Durchflussquerschnitts zwischen Pumpenanschluss und Verbraucheranschluss vom Pumpendruck und in Richtung Verringerung des Durchflussquerschnitts vom Druck am Bremsanschluss des Anhängerbremsventils und von einer Feder beaufschlagt.

Auch aus der DE 195 14 733 B4 ist ein Anhängerbremsventil bekannt. Bei diesem Anhängerbremsventil,wird der Druck des Bremskreises des Zugfahrzeuges (Zugfahrzeugbremsdruck) als Pilotdruck zur Ansteuerung des Anhängerbremsventils verwendet. Der Pilotdruck wirkt auf einen Übersetzerkolben (Pilotkolben), der über eine Druckfeder an einer Stirnseite eines Steuerschiebers des Bremsventils abgestützt ist. Auf der anderen Stirnseite des Steuerschiebers ist eine Steuerfeder angeordnet, so dass der Steuerschieber in seiner Grundstellung zwischen der Steuerfeder und der Druckfeder eingespannt ist. In dieser federvorgespannten Grundposition des Steuerschiebers ist ein Bremsanschluss des Anhängerbremsventils über einen Rücklaufanschluss mit einem Tank verbunden so dass die Anhängerbremse drucklos ist. Bei Betätigung der Bremse des Zugfahrzeuges, beispielsweise über ein Bremspedal, wird der dem Druck des Bremskreises des Zugfahrzeuges entsprechende Pilotdruck erhöht, so dass der Steuerschieber über den Pilotkolben gegen die Kraft der Steuerfeder verschoben wird, um einen Pumpenanschluss des Anhängerbremsventils mit dem Bremsanschluss des Anhängerbremssystems zu verbinden und Bremsdruck im Anhängerbremssystem aufzubauen. Hierbei wirkt die Druckfeder bei vergleichsweise geringem Pilotdruck ähnlich wie ein starres Übertragungselement, d.h. der Steuerschieber wird direkt durch die Wirkung des Pilotdrucks gegen die Kraft der Steuerfeder verschoben, um das Anhängerbremssystem anzusteuern. Nach dem Überschreiten eines vorbestimmten Pilotdrucks wird die Druckfeder zusammengedrückt und bestimmt mit der aus dem Pilotdruck resultierenden Kraft auf den Pilotkolben die auf den Steuerschieber in Bremsdruckaufbaurichtung einwirkende Kraft.

Nachteilig bei derartigen Anhängerbremsventilen ist, dass diese aufgrund der auftretenden Reibungsverluste und der geringen Federraten des Federsystems eine geringe Ansprechempfindlichkeit und hohe Hysterese aufweisen.

Demgegenüber liegt der Erfindung die Aufgabe zugrunde, ein hydraulisches Anhängerbremsventil.zu schaffen, das eine verbesserte Ansteuerung eines Anhängerbremssystems bei minimalem vorrichtungstechnischem Aufwand ermöglicht.

Diese Aufgabe wird durch ein Anhängerbremsventil mit den Merkmalen des Patentanspruchs 1 gelöst.

Das erfindungsgemäße Anhängerbremsventil zum Beaufschlagen einer Anhängerbremse mit einem Bremsdruck hat ein Ventilgehäuse, in dessen Ventilbohrung eine Bremsschieberanordnung verschiebbar geführt ist, über die wahlweise ein mit einer Druckmittelquelle verbundener Pumpenanschluss mit einem Bremsanschluss, ein mit einer Druckmittelsenke verbundener Rücklaufanschluss mit dem Bremsanschluss und/oder der Pumpenanschluss mit einem Verbraucheranschluss verbindbar sind, wobei die Ansteuerung des Anhängerbremsventils in Abhängigkeit von einem vorzugsweise vom Zugfahrzeugbremsdruck abhängigen Pilotdruck erfolgt. Erfindungsgemäß ist die Bremsschieberanordnung in Richtung Verringerung des Bremsdrucks und Erhöhung des Bremsdrucks mit Steuerdrücken beaufschlagt, von denen der in Richtung Bremsdruckaufbau wirksame Steuerdruck durch ein Druckbegrenzungsventil bestimmt ist, das in Schließrichtung vom Zugfahrzeugbremsdruck beaufschlagt ist. Bei der erfindungsgemäßen Lösung ist die Bremsschieberanordnung des Anhängerbremsventils somit zwischen Steuerdrücken eingespannt und daher weitgehend unempfindlich gegenüber Reibung. Dadurch hat das Anhängerventil, gegenüber dem Stand der Technik gemäß der DE 195 14 733 B4 mit federbelastetem Steuerschieber, eine verbesserte Ansprechempfindlichkeit bei verringerter Hysterese, so dass eine verbesserte Ansteuerung der Anhängerbremsanlage bei minimalem vorrichtungstechnischem Aufwand ermöglicht ist.

Bei einem bevorzugten Ausführungsbeispiel der Erfindung hat das Druckbegrenzungsventil einen Schließkörper, der über einen Übersetzerkolben in Schließrichtung vom Pilotdruck beaufschlagt ist.

Der Pilotdruck wirkt vorzugsweise auf eine Stirnfläche des Übersetzerkolbens mit größerem Querschnitt als die Sitzfläche des Schließkörpers.

Vorzugsweise ist ein von der in Bremsdruckaufbaurichtung wirksamen Steuerfläche der Bremsschieberanordnung begrenzter Steuerraum über einen Steuerkanal mit einer Pumpenleitung verbunden, wobei in dem Steuerkanal zumindest ein Stromventil angeordnet ist.

Erfindungsgemäß wird es bevorzugt, das Stromventil als Stromregelventil auszubilden. Dadurch wird der eingestellte Druckmittelvolumenstrom unabhängig von Druckschwankungen in der Pumpenleitung konstant gehalten.

Ein von der in Bremsdruckabbaurichtung wirksamen Steuerfläche der Bremsschieberanordnung begrenzter Steuerraum ist vorzugsweise vom Bremsdruck und der Kraft einer Regelfeder beaufschlagt.

Bei einer weiteren bevorzugten Ausführung der Erfindung ist die Bremsschieberanordnung zweiteilig mit einem Bremsschieber und einem Prioritätsschieber zum bevorzugten Versorgen des Anhängerbremssystems mit Druckmittel ausgebildet.

Vorzugsweise ist über den Prioritätsschieber die Druckmittelströmung von dem Pumpenanschluss zu dem Verbraucheranschluss und/oder zu einem Verbindungskanal steuerbar und über den Bremsschieber ein Bremsanschluss zum Bremsdruckaufbau mit dem Verbindungskanal oder zum Bremsdruckabbau mit dem Rücklaufanschluss verbindbar.

Der Prioritätsschieber ist in Richtung Aufsteuern der Verbindung vom Pumpenanschluss zum Verbraucheranschluss und der Bremsschieber in Richtung Verbindung Bremsdruckanschluss mit dem Rücklaufanschluss vorzugsweise durch den Druck im Verbindungskanal beaufschlagt.

Vorzugsweise ist ein von der in Bremsdruckaufbaurichtung wirksamen Steuerfläche des Prioritätsschiebers begrenzter Steuerraum über eine Steuerverbindungsleitung vom Bremsdruck und der Kraft einer Druckfeder beaufschlagt. Der Druck stromaufwärts des Bremsschiebers wirkt dann auf den Prioritätsschieber in Richtung Verringerung des Druckmittelstromes und der Druck stromabwärts des Bremsschiebers beaufschlagt den Prioritätsschieber zusammen mit der Kraft der Druckfeder in Richtung Vergrößerung des Druckmittelstromes. Somit stellt der Prioritätsschieber für den Bremsschieber eine Drei-Wege-Druckwaage dar und bildet mit dem Bremsschieber ein Stromregelventil, das den maximalen Druckmittelstrom begrenzt. In der Steuerverbindungsleitung ist vorzugsweise eine Blende vorgesehen.

Ein von der in Bremsdruckaufbaurichtung wirksamen Steuerfläche des Bremsschiebers begrenzter Steuerraum ist vorzugsweise über einen Steuerkanal mit dem Verbindungskanal verbunden und vom Druck im Steuerkanal und der Kraft einer Feder beaufschlagt. In dem Steuerkanal ist vorzugsweise eine Blende vorgesehen, über die der Volumenstrom definiert eingestellt ist und dadurch die Verlustleistung des Anhängerbremsventils minimiert wird.

Bei einer erfindungsgemäßen Variante des Anhängerbremsventils ist im Verbindungskanal stromaufwärts des Bremsschiebers eine Blende zur Begrenzung des Druckmittelstromes vorgesehen.

Die Federrate der Druckfeder des Prioritätsschiebers ist bei einer vorteilhaften Ausführungsform der Erfindung größer als die Federrate der Feder des Bremsschiebers. Dadurch hält der Druck zwischen dem Prioritätsschieber und dem Bremsschieber der Druckfeder das Gleichgewicht, während er den Bremsschieber gegen dessen Feder in Bremsdruckabbaurichtung bewegt.

Erfindungsgemäß wird es besonders bevorzugt, wenn der maximale Druck im Steuerkanal durch ein Maximaldruckbegrenzungsventil bestimmt ist.

Das Maximaldruckbegrenzungsventil ist vorzugsweise verstellbar ausgeführt und weist einen Begrenzungsdruck auf, der größer als der Begrenzungsdruck des Druckbegrenzungsventils ist. Mit dem Maximaldruckbegrenzungsventil ist es möglich, über den Druck im Steuerkanal den Bremsdruck des Anhängerbremssystems an unterschiedliche Beladezustände des Anhängers anzupassen, um eine optimale Bremswirkung zu erzielen. Beispielsweise wird der Öffnungsdruck des Maximaldruckbegrenzungsventils durch eine von außen einstellbare Feder bestimmt, über die der Bediener den maximalen Bremsdruck lastabhängig von Hand oder durch Verstellung mit einem Elektromagneten einstellen kann.

Bei einer besonders kompakten Ausführung des Anhängerbremsventils ist der Bremsschieber koaxial zum Prioritätsschieber in einem gemeinsamen Gehäuse mit dem Druckbegrenzungsventil und dem Maximaldruck-begrenzungsventil angeordnet.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 ein Schaltschema eines ersten Ausführungsbeispiels eines erfindungsgemäßen Anhängerbremsventils;
Figur 2 ein Schaltschema eines weiteren Ausführungsbeispiels eines erfindungsgemäßen Anhängerbremsventils;
Figur 3 das Schaltschema aus Figur 2 bei unbetätigter Bremse und
Figur 4 eine Schnittdarstellung einer konstruktiven Lösung des Anhängerbremsventils aus Figur 2.

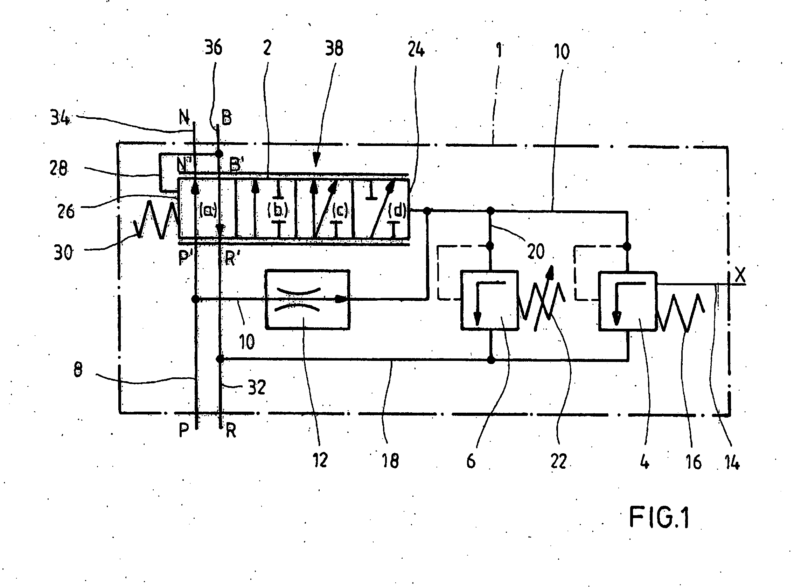

Anhand Figur 1 wird zunächst ein erstes Ausführungsbeispiel eines erfindungsgemäßen Anhängerbremsventils erläutert, das eine Bremsschieberanordnung mit einem einzigen Hauptschieber verwendet.

Figur 1 zeigt ein Schaltschema eines Anhängerbremsventils 1 zur Druckmittelversorgung eines Bremsanschlusses B und eines Verbraucheranschlusses N. Das Anhängerbremsventil 1 besteht im Wesentlichen aus einem stetig verstellbaren 4-Wegeventil 2, einem Druckbegrenzungsventil 4 zum Einstellen eines Steuerdruckes in Abhängigkeit von einem Pilotdruck und einem parallel zu diesem angeordneten Maximaldruckbegrenzungsventil 6 über das der maximale Steuerdruck begrenzt ist.

Die Druckmittelversorgung des Anhängerbremsventils 1 erfolgt über einen Pumpenanschluss P, der über eine Pumpenleitung mit einer nicht dargestellten Pumpe verbunden ist. Das Wegeventil 2 hat einen Pumpenanschluss P' der über die Pumpenleitung 8 mit dem Pumpenanschluss P verbunden ist, einen Rücklaufanschluss R', der über eine Rücklaufleitung 3.2 mit dem Rücklaufanschluss R verbunden ist, einen Verbraucheranschluss N', der über eine Vorlaufleitung 34 mit dem Verbraucheranschluss N verbunden ist und einen Bremsanschluss B', der über eine Bremsleitung 36 mit dem Bremsanschluss B verbunden ist. In der dargestellten federvorbelasteten Grundstellung (a) des Wegeventils 2 ist der Pumpenanschluss P' mit dem Verbräucheranschluss N' und der Bremsanschluss B' mit dem Rücklaufanschluss R' verbunden, so dass der Verbraucher über die Pumpe mit Druckmittel versorgt und das Anhängerbremssystem zum Tank entlastet ist. Von der Pumpenleitung 8 zweigt ein Steuerkanal 10 zu einer Steuerfläche.24 des Wegeventils 2 ab. Der Druck in dem Steuerkanal 10 wird durch das mit einem Steuereingang X über eine Steuerdruckeingangsleitung 14 mit dem Pilotdruck und von der Kraft einer Feder 16 beaufschlagte Druckbegrenzungsventil 4 bestimmt, das zwischen dem Steuerkanal 10 und einer Steuerdrückentlastungsleitung 18 angeordnet ist. In dem Steuerkanal 10 ist ein Stromregelventil 12 angeordnet, über das bei geöffnetem Druckbegrenzungsventil 4 ein Steuerölvolumenstrom unabhängig von Druckschwankungen in der Pumpenleitung 8 konstant gehalten wird. Von dem Steuerkanal 10 zweigt eine mit der Steuerdruckentlastungsleitung 18 verbundene Druckbegrenzungsleitung 20 ab, in der das Maximaldruckbegrenzungsventil 6 parallel zu dem Druckbegrenzungsventil 4 angeordnet ist. Bei dem gezeigten Ausführungsbeispiel wird der Öffnungsdruck des Maximaldruckbegrenzungsventils 6 durch eine von außen einstellbare Feder 22 bestimmt, über die der Bediener den maximalen Bremsdruck lastabhängig einstellen kann. Dadurch ist es möglich, über den maximalen Steueröldruck im Steuerkanal 10 den Bremsdruck des Anhängerbremssystems an unterschiedliche Beladezustände des Anhängers anzupassen, um eine optimale Bremswirkung zu erzielen.

Erfindungsgemäß ist das Wegeventil 2 in Richtung Verringerung des Bremsdrucks und Erhöhung des Bremsdrucks mit Steuerdrücken beaufschlagt, von denen der in Richtung Bremsdruckaufbau wirksame Steuerdruck durch das Druckbegrenzungsventil 4 bestimmt ist, das in Schließrichtung von dem Pilotdruck und der Kraft der Feder 16 beaufschlagt ist. Hierzu ist der über den Steuerkanal 10 und das Stromregelventil 12 von dem Pumpenstrom.in der Pumpenleitung 8 abgezweigte Steuerölstrom auf eine Steuerfläche 24 des Wegeventils geführt und ein von einer in Bremsdruckabbaurichtung wirksamen Steuerfläche 26 des Wegeventils 2 begrenzter Steuerraum (nicht dargestellt) über eine Steuerdruckleitung 28 vom Bremsdruck und der Kraft einer Regelfeder 30 beaufschlagt. Aufgrund der Druckbeaufschlagung des Wegeventils 2 auf beiden Stirnseiten 24, 26 ist das Anhängerbremsventil 1 weitgehend unempfindlich gegenüber Reibung und hat dadurch, gegenüber dem Stand der Technik gemäß der DE 195 14 733 B4, eine verbesserte Ansprechempfindlichkeit bei verringerter Hysterese.

Die Ansteuerung des Wegeventils 2 erfolgt in Abhängigkeit des von dem Druckbegrenzungsventil 4 bestimmten Steuerdruckes im Steuerkanal 10. Durch Betätigung der Bremse, beispielsweise über ein Bremspedal, steigt der Zugfahrzeugbremsdruck an, der dem Pilotdruck am Steuereingang X des Druckbegrenzungsventils 4 entspricht. Dadurch wird das Druckbegrenzungsventil 4 in Richtung seiner Schließstellung beaufschlagt und ein von dem Zugfahrzeugbremsdruck abhängiger Druckanstieg im Steuerkanal 10 bewirkt, der über die in Bremsdruckabbaurichtung wirksame Steuerfläche 24 des stetig verstellbaren Wegeventils 2 dieses gegen die Kraft der Regelfeder 30 in seine Arbeitspositionen bewegt. In einer beispielhaft gezeigten Arbeitsposition (b) des Wegeventils 2 ist der Pumpenanschluss P' mit dem Verbraucheranschluss N' verbunden und die Verbindung zwischen Bremsanschluss B' und Rücklaufanschluss R' gesperrt. In einer Arbeitsposition (c) ist der Pumpenanschluss P' mit dem Verbraucheranschluss N' und dem Bremsanschluss B' verbunden und der Rücklaufanschluss R' gesperrt. In einer weiteren Arbeitsposition (d) ist der Pumpenanschluss P' zum Bremsdruckaufbau mit dem Bremsanschluss B' verbunden und die Verbindungen zwischen Verbraucheranschluss N' und Rücklaufanschluss R' gesperrt.

Im Folgenden wird die Funktion des Anhängerbremsventils 1 gemäß des ersten Ausführungsbeispiels anhand Figur 1 erläutert. In der federvorbelasteten Grundstellung (a) des Wegeventils 2 wird der Verbraucher, beispielsweise ein Kraftheber mit Druckmittel versorgt und das Anhängerbremssystem zum Tank entlastet. Über den Steuerkanal 10 wird ein Steuerölstrom vom Pumpenstrom abgezweigt, so dass sich bei geschlossenem Druckbegrenzungsventil 4 ein Steuerdruck aufbaut, der auf die in Bremsdruckaufbaurichtung wirksame Steuerfläche 24 des Wegeventils 2 wirkt. Bei unbetätigter Bremse des Zugfahrzeuges kann das Druckmittel über das lediglich von der Kraft der Feder 16 und dem geringen Pilotdruck am Steuereingang X beaufschlagte Druckbegrenzungsventil 4 und die Steuerdruckentlastungsleitung 18 zum Tank hin strömen, so dass der Druck im Steuerkanal 10 gegenüber der Kraft der Feder 30 gering ist und die Bremsschieberanordnung 38 in der federvorbelasteten Grundstellung (a) bleibt. Hierbei wird der Steuerölvolumenstrom über das Stromregelventil 12 konstant gehalten. Wird die Zugfahrzeugbremse betätigt, steigt der Bremsdruck im Zugfahrzeug und dadurch der Druck am Steuereingang X des Druckbegrenzungsventils 4 an. Dadurch wird das Druckbegrenzungsventil 4 zusätzlich zu der Kraft der.Feder 16 in Richtung seiner Schließstellung beaufschlagt und ein von dem Zugfahrzeugbremsdruck abhängiger Steuerdruckanstieg im Steuerkanal 10 bewirkt. Durch den Druckaufbau im Steuerkanal 10 wird das Wegeventil 2 gegen die Kraft der Regelfeder 30 in seine Arbeitspositionen verschoben. In der beispielhaft gezeigten Arbeitsposition (b) des Wegeventils 2 ist der Pumpenanschluss P' mit dem Verbraucheranschluss N' verbunden und versorgt diesen mit Druckmittel. Die Verbindung zwischen Bremsanschluss B' und Rücklaufanschluss R' ist in diese Arbeitsposition gesperrt, so dass der Bremsdruck im Anhängerbremssystem gehalten wird. In der Arbeitsposition (c) ist der Pumpenanschluss P' mit dem Verbraucheranschluss N' und dem Bremsanschluss B' verbunden, so dass diese mit Druckmittel versorgt werden. Der Rücklaufanschluss R' ist gesperrt. Zum Aufbau von Bremsdruck im Anhängerbremssystem ist in einer weiteren Arbeitsposition (d) (Endstellung) der Pumpenanschluss P' mit dem Bremsanschluss B' verbunden. Die Verbindungen zwischen Verbraucheranschluss N' und Rücklaufanschluss R' ist gesperrt. Der Druck in der Bremsleitung 36 wird über die Steuerdruckleitung 28 an die in Bremsdruckabbaürichtung wirksame Steuerfläche 26 des Wegeventils gemeldet. Die Steuerfläche 26 kann bei einem erfindungsgemäßen Ausführungsbeispiel so groß sein wie die Steuerfläche 24. Aufgrund der Druckbeaufschlagung des Wegeventils 2 auf beiden Stirnseiten 24, 26 ist das Anhängerbremsventil 1 weitgehend unempfindlich gegenüber Reibung. Wird bei betätigter Bremse ein vom Benutzer eingestellter, vom Beladezustand des Anhängers abhängiger maximaler Steuerdruck im Anhängerbremsventil 1 überschritten, wird das Maximaldruckbegrenzungsventil 6 aufgesteuert, so dass Druckmittel über die Steuerdruckentlastungsleitung 18 zum Tank hin strömen kann. Dadurch ist es möglich, über den maximalen Steueröldruck im Steuerkanal 10 den Bremsdruck des Anhängerbremssystems an unterschiedliche Beladezustände des Anhängers anzupassen, um eine optimale Bremswirkung zu erzielen.

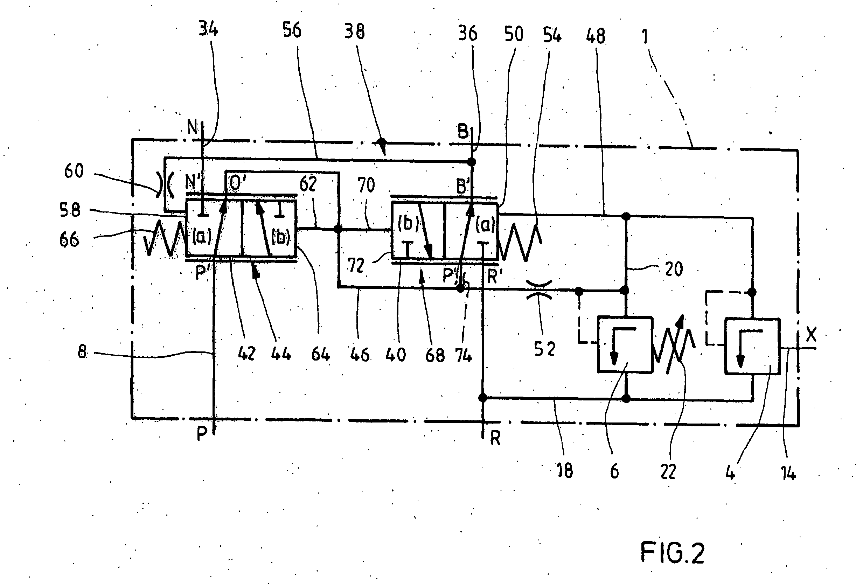

Gemäß Figur 2, die ein Schaltschema eines Ausführungsbeispiels des erfindungsgemäßen Anhängerbremsventils 1 mit einer zweiteiligen Bremsschieberanordnung 38 zeigt, hat dieses einen Bremsschieber 40 und einen Prioritätsschieber 42 zum bevorzugten Versorgen des Anhängerbremssystems mit Druckmittel. Der Prioritätsschieber 42 ist bei diesem Ausführungsbeispiel als stetig verstellbares 3-Wegeventil 44 mit einem Pumpenanschluss P', einem Verbraucheranschluss N' und einem Bremsausgangsanschluss O' ausgeführt. Der Pumpenanschluss P' ist über die Pumpenleitung 8 mit dem Pumpenanschluss P und der Verbraucheranschluss N' über die Vorlaufleitung 34 mit dem Verbraucheranschluss N verbunden. Der Bremsausgangsanschluss O' des Wegeventils 44 ist mit einem Verbindungskanal 46 verbunden, der den Bremsausgangsanschluss O' mit einem Pumpenanschluss P'' des Bremsschiebers 40 verbindet. Der Verbindungskanal 46 mündet in die Druckbegrenzungsleitung 20, die wiederum in einen Steuerkanal 48 mündet, der eine in Bremsdruckaufbaurichtung wirksame Steuerfläche 50 des Bremsschiebers 40 mit Steuerdruck beaufschlagt. In dem Verbindungskanal 46 ist eine Blende 52 zur Begrenzung des Steuerdruckvolumenstromes vorgesehen. Der Druck in dem Steuerkanal 48 wird durch das über die Steuerdruckeingangsleitung 14 mit dem Pilotdruck in Schließrichtung beaufschlagte Druckbegrenzungsventil 4 bestimmt, das zwischen dem Steuerkanal 48 und der Steuerdruckentlastungsleitung 18 angeordnet ist. Der maximale Druck im Steuerkanal 48 wird durch das mit der Steuerdruckentlastungsleitung 18 verbundene Maximaldruckbegrenzungsventil 6 begrenzt, das in der Druckbegrenzungsleitung 20 parallel zu dem Druckbegrenzungsventil 4 angeordnet ist. Das Maximaldruckbegrenzungsventil 6 ist verstellbar ausgeführt und weist einen Begrenzungsdruck auf, der größer als der Begrenzungsdruck des Druckbegrenzungsventils 4 ist. Von der Bremsleitung 36 zweigt stromaufwärts des Bremsschiebers 40 eine Steuerverbindungsleitung 56 ab, die eine in Bremsdruckaufbäurichtung wirksame Steuerfläche 58 des Prioritätsschiebers 42 mit Druck beaufschlagt. In der Steuerverbindungsleitung 56 ist eine Blende 60 vorgesehen. Von dem.Verbindungskanal 46 zweigt eine Steuerleitung 62 zu einer Steuerfläche 64 des Prioritätsschiebers 42 ab. In der dargestellten, über die Kraft einer Druckfeder 66 vorbelasteten Grundposition (a) des Prioritätsschiebers 42 ist der Pumpenanschluss P' mit dem Bremsausgangsanschluss O' verbunden und der Verbraucheranschluss N' gesperrt.

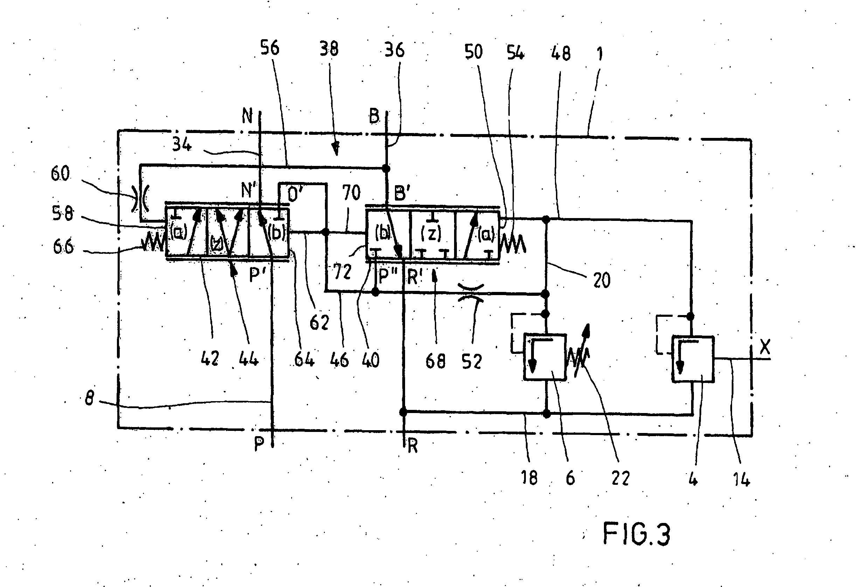

Figur 3 zeigt das Schaltschema des Anhängerbremsventils 1 aus Figur 2 bei,unbetätigter Bremse, wobei in den Schaltsymbolen der Wegeventile 44, 68 die zwischenstellungen eingezeichnet sind, die in Figur 2 der einfachheithalber nicht dargestellt sind. Durch Druckaufbau in der Steuerleitung 62 wird das stetig verstellbare Wegeventil 44 gegen die Kraft der Druckfeder 66 nach links verschoben, so dass die Verbindung von dem Pumpenanschluss P' zu dem Verbraucheranschluss N' allmählich aufgesteuert und die Verbindung zu dem Bremsausgangsanschluss O' zugesteuert wird. In einer Zwischenstellung (z) ist der Pumpenanschluss P' mit dem Verbraucheranschluss N' und dem Bremsausgangsanschluss O' verbunden. In der gezeigten Endposition (b) wird lediglich der Verbraucher (nicht dargestellt) über den Verbraucheranschluss N' mit Druckmittel versorgt. Die Verbindung zu dem Bremsausgangsanschluss O' und dadurch die Verbindung über den Verbindungskanal 46 zu dem Bremsschieber 40 sind in der Endposition (b) des Priöritätsschiebers 42 gesperrt.

Gemäß Figur 2 ist der Bremsschieber 40 als stetig verstellbares 3-Wegeventil 68 mit einem Pumpenanschluss P'', einem Bremsanschluss B' und einem Rücklaufanschluss R' ausgeführt, Der Pumpenanschluss P'' ist über den Verbindungskanal 46 mit dem Bremsausgangsanschluss O' des Prioritätsschiebers und der Bremsanschluss B' über die Bremsleitung 36 mit dem Anhängerbremssystem verbunden. Über den Bremsschieber 40 ist der Bremsanschluss B' zum Bremsdruckaufbau mit dem Verbindungskanal 46 und zum Bremsdruckabbau mit dem Rücklaufanschluss R' verbindbar. Von der Bremsleitung 36 zweigt die Steuerverbindungsleitung 56 ab, die die in Bremsdruckaufbaurichtung wirksame Steuerfläche 58 des Prioritätsschiebers 42 zusätzlich zu der Kraft der Druckfeder 66 mit Druck beaufschlagt. In der dargestellten, über die Kraft der Feder 54 vorbelasteten Grundposition (a) des Bremsschiebers 42 ist der Pumpenanschluss P" mit dem Bremsanschluss B' verbunden und der Rücklaufanschluss R' gesperrt. Durch den Druck in einer mit dem Verbindungskanal 46 verbundenen Steuerdruckverbindungsleitung 70, die eine Steuerfläche 72 beaufschlagt, wird der Bremsschieber 40 gegen die Kraft der Feder 54 und den Druck an der Steuerfläche 50 in seine Arbeitspositionen verschoben.. Bei dem gezeigten Ausführungsbeispiel ist die Federrate der Druckfeder 66 des Prioritätsschiebers 42 größer als die. Federrate der Feder 54 des Bremsschiebers 40. Dadurch hält der Druck zwischen dem Prioritätsschieber 42 und dem Bremsschieber 40 der Druckfeder 66 das Gleichgewicht, während er den Bremsschieber 40 gegen dessen Feder 54 in Bremsdruckabbaurichtung drückt, so dass sich der Bremsschieber 40 bei unbetätigter Bremse gemäß Figur 3 in der Arbeitsposition (b) befindet. In dieser Arbeitsposition ist der Bremsanschluss B' des Bremsschiebers 40 mit dem Rücklaufanschluss R' zum Bremsdruckabbau verbunden und die Verbindung zu dem Pumpenanschluss P'' gesperrt. Der Prioritätsschieber 42 ist in Richtung Aufsteuern der Verbindung vom Pumpenanschluss P' zum Verbraucheranschluss N' und der Bremsschieber 40 in Richtung Verbindung Bremsdruckanschluss B' mit Rücklaufanschluss R' durch den Druck im Verbindungskanal 46 beaufschlagt. In einer Übergangsstellung (z) des Bremsschiebers 40 ist die Verbindung von dem Bremsanschluss B' zu dem Pumpenanschluss P'' und zu dem Rücklaufanschluss R' gesperrt, so dass der.Druck in der Anhängerbremse gehalten wird.

Erfindungsgemäß sind die Stirnflächen 58, 64 bzw. 50, 72 des Prioritätsschiebers 42 und des Bremsschiebers 40 in Richtung Verringerung des Bremsdrucks und Erhöhung des Bremsdrucks mit Steuerdrücken beaufschlagt, von denen der in Richtung Bremsdruckaufbau wirksame Steuerdruck durch das Druckbegrenzungsventil 4 bestimmt ist, das in Schließrichtung über die Steuerdruckeingangsleitung 14 von dem Zugfahrzeugbremsdruck beaufschlagt ist. Mit anderen Worten, der Druck stromaufwärts des Bremsschiebers 40 beaufschlagt den Prioritätsschieber 42 in Richtung Verringerung des Bremsölstromes und der Druck stromabwärts des Bremsschiebers 40 wirkt auf den Prioritätsschieber 40 zusammen mit der Kraft der Feder 66 in Richtung Vergrößerung des Bremsölstromes. Dadurch stellt der Prioritätsschieber 42 für den Bremsschieber 40 eine Drei-Wege-Druckwaage dar und bildet mit dem Bremsschieber 40 ein Stromregelventil, das den maximalen Bremsölstrom begrenzt. Aufgrund der Druckbeaufschlagung des Prioritätsschiebers 42 und des Bremsschiebers 40 auf jeweils beiden Stirnseiten 58, 64 bzw. 50, 72 ist das Anhängerbremsventil 1 weitgehend unempfindlich gegenüber Reibung und eine verbesserte Ansprechempfindlichkeit bei verringerter Hysterese gewährleistet.

Bei einer erfindungsgemäßen Variante des Anhängerbremsventils 1 ist im Verbindungskanal 46 stromaufwärts des Bremsschiebers 40 eine in Figur 2 gestrichelt angedeutete Blende 74 zur Begrenzung des Bremsölstromes vorgesehen.

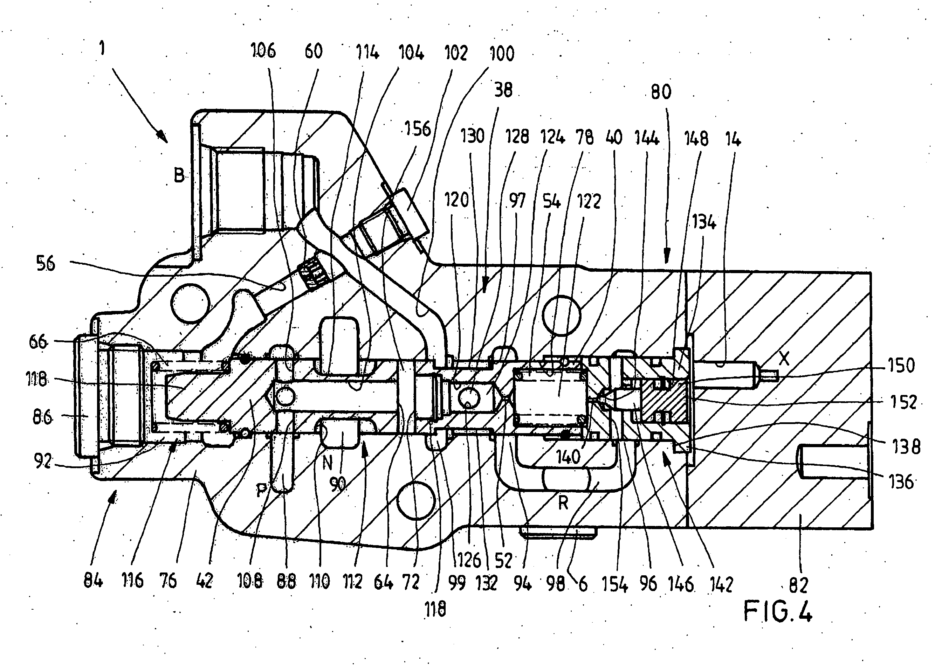

Figur 4 zeigt ein konkretes Ausführungsbeispiel des erfindungsgemäßen Anhängerbremsventils 1 aus Figur 2. Dieses hat ein etwa zylinderförmiges Ventilgehäuse 76 mit einer stufenförmigen Ventilbohrung 78. Das Ventilgehäuse 76 hat einen Pumpenanschluss P, einen Bremsanschluss B, einen Rücklaufanschluss R und einen Verbraucheranschluss N. In der Ventilbohrung 78 sind der Prioritätsschieber 42 und der koaxial zu diesem angeordnete Bremsschieber 40 gleitend geführt. Die Ventilbohrung 78 ist an einem ersten Endabschnitt 80 durch einen Ansteuerkopf 82 und an einem zweiten Endabschnitt 84. durch eine eingeschraubte Verschlussschraube 86 verschlossen. In Radialrichtung ist die Ventilbohrung 78 zu einem mit dem Pumpenanschluss P verbundenen Zulaufraum 88, einem mit dem Verbraucheranschluss N verbundenen Vorlaufraum 90, einem mit dem Bremsanschluss B verbundenen Bremsanschlussraum 99 sowie einem Federraum 92 und zwei Rücklaufkanälen 94, 96 erweitert. Die beiden Rücklaufkanäle 94, 96 sind durch einen etwa U-förmigen Rücklaufraum 98 verbunden, der wiederum über den Rücklaufanschluss R mit dem Tank verbunden ist. Von dem Bremsanschluss B ausgehend mündet ein Bremsanschlusskanal 100, der der Bremsleitung 36 in Figur 2 entspricht im Bereich des Bremsschiebers 40 in den Bremsanschlussraum 99 ein. Von dem Bremsanschlusskanal 100 zweigt die Steuerverbindungsleitung 56 ab, die einerseits im Federraum 92 mündet und andererseits über eine Verschlussschraube 102 abgesperrt ist. In der Steuerverbindungsleitung 56 ist die Blende 60 eingesetzt.

Der Prioritätsschieber 42 hat eine in Axialrichtung verlaufende Sacklochbohrung 104 die in eine Stirnseite 64 mündet. Im Bodenbereich der Sacklochbohrung 104 ist ein Radialbohrungsstern 106 eingebracht, über den in der gezeigten Arbeitsposition (a) des Prioritätsschiebers 42 eine Verbindung vom Zulaufraum 88 zu der Sacklochbohrung 104 aufgesteuert ist, die über von Umfangswandungen der Bohrungen des Radialbohrungssterns 106 gebildete, Steuerkanten 108 bei einer Axialenverschiebung des Prioritätsschiebers 42 nach links in Figur 4, zusteuerbar ist. An einem vorderen Endabschnitt 112 hat der Prioritätsschieber 42 eine Ablaufsteuernut 114, über die bei einer Axialverschiebung des Prioritätsschiebers 42 nach links in Figur 4, über eine Steuerkante 110 eine Verbindung von dem Zulaufraum 88 zu dem Vorlaufraum 90, d.h. von dem Pumpenanschluss P zu dem Verbraucheranschluss N aufsteuerbar ist. Der Prioritätsschieber 42 geht an einem zweiten Endabschnitt 116 in einen ebenfalls zylinderförmigen Halteabschnitt 118 mit kleinerem Durchmesser über, der die Druckfeder 66 trägt. Die Druckfeder 66 ist an der Verschlussschraube 86 abgestützt und über diese in Axialrichtung lagefixiert. In Bremsdruckaufbaurichtung ist der Prioritätsschieber 42 von der Kraft der Druckfeder 66 und dem Druck in der Steuerverbindungsleitung 56 beaufschlagt.

Der Bremsschieber 40 hat eine Axialbohrung 120, die zu ihren beiden Endabschnitten ausgehend von der Blende 52 hin stufenförmig erweitert ist, so dass ein Federraum 122 und ein Haltebereich 124 ausgebildet werden. In den Haltebereich 124 kann bei einer erfindungsgemäßen Variante die Blende 74 (siehe Figur 2) zur Begrenzung des Bremsölstromes eingesetzt sein. Der Bremsschieber 40 ist im Haltebereich 124 mit zwei diametral angeordneten Radialbohrungen 126 versehen, die in der gezeigten Bremsstellung (a) des Bremsschiebers 40 von einer Wandung 128 der Ventilbohrung 78 versperrt sind. Der Bremsschieber 40 hat weiterhin zwei diametral, um 90° zu den Radialbohrungeiz 126 angeordnete axial verlaufende Abfräsungen 130, 132, über die jeweils durch eine Steuerkante 97 eine Verbindung zwischen der im spitzen Winkel zu der Ventilbohrung 78 in diese mündende Bremsanschlussbohrung 100 und dem Rücklaufraum 98 aufgesteuert ist. Der Federraum 122 des Bremsschiebers 40 ist von einer Ventilbuchse 134 begrenzt, die stirnseitig in die Ventilbohrung 78 eingesetzt und über einen ringförmigen Flansch 136 in Anlage an eine Anlageschulter 138 des Ventilgehäuses 76 gebracht ist. Die Ventilbuchse 134 wird von dem Ansteuerkopf 82 in der Ventilbohrung 78 in Axialrichtung fixiert und ist mit einer Drosselbohrung 140 versehen, die sich zu einem Endabschnitt 142 hin zu einem Sitz 144 für einen kegelförmig verjüngten Schließkörper 146 und einen Kolbensitz 148 für einen zylinderförmigen Übersetzerkolben 150 (Pilotkolben) erweitert ist. Bei dem gezeigten Ausführungsbeispiel wirkt der Zugfahrzeugbremsdruck auf eine Stirnfläche 152 des Übersetzerkolbens 150 mit größerem Querschnitt als der Kolbensitz des Schließkörpers 146 ein. Die Stufenbohrung 148 der Ventilbuchse 134 ist im Bereich des Schließkörpers 146 von einem Bohrungsstern 154 durchsetzt, der in den Rücklaufkanal 96 mündet, so dass über den Schließkörper 146 eine Verbindung von dem Federraum 122 des Bremsschiebers 40 zu dem Rücklaufraum 98 aufsteuerbar ist. Die Ventilbuchse 134 bildet.mit dem Schließkörper 146 sowie dem Pilotkolben 150 das über die Steuerdruckeingangsleitung 14 mit dem Zugfahrzeugbremsdruck beaufschlagte Druckbegrenzungsventil 4 gemäß Figur 2 aus. Der maximale Steueröldruck im Anhängerbremsventil 1 wird durch das mit dem Rücklaufraum 98 verbundene Maximaldruckbegrenzungsventil 6 bestimmt. Dieses ist verstellbar ausgeführt und weist einen Begrenzungsdruck auf, der größer als der Begrenzungsdruck des Druckbegrenzungsventils 4 ist. Mit dem Maximaldruckbegrenzungsventil 6 ist es möglich, über den Steueröldruck den Bremsdruck des Anhängerbremssystems an unterschiedliche Beladezustände des Anhängers anzupassen, um eine optimale Bremswirkung zu erzielen.

Im Folgenden wird die Funktion des Anhängerbremsventils 1 gemäß dem zweiten Ausführungsbeispiel mit Bezug auf die Figuren 2 bis 4 beispielhaft erläutert. In der gezeigten Grundstellung (a) (Bremse nicht betätigt) des Prioritätsschiebers 42 ist der Zulaufraum 88 mit dem Bohrungsstern 106 des Prioritätsschiebers 42 verbunden, so dass das von der Pumpe in den Zulaufraum 88 geförderte Druckmittel über den Radialbohrungsstern 106 in die Sacklochbohrung 104 des Prioritätsschiebers 42 und über diese in einen Verbindungsraum 156 zwischen der Stirnfläche 64 des Prioritätsschiebers 42 und der Stirnfläche 72 des Bremsschiebers 40 strömen kann. Aufgrund der Druckbeaufschlagung der Schieberstirnfläche 72 des Bremsschiebers, wird dieser gegen die Kraft der Feder 54 gemäß Figur 4 nach rechts verschoben, wobei die Steuerölströmung in den Halteraum 124 einfließen und über die Blende 52 in den Federraum 54 und das geöffnete Druckbegrenzungsventil 4 zum Tank abfließen kann. In dieser Arbeitsposition (b) ist die Steuerkante 97 aufgesteuert und das Anhängerbremssystem über die Bremsanschlussbohrung 100 und die von den Abfräsungen 130, 132 des Bremsschiebers 140 gebildeten Kanäle mit dem Rücklaufraum 98 verbunden. Nachdem der Druck im Verbindungsraum 156 zwischen dem Prioritätsschieber 42 und dem Bremsschieber 40 die Schieberstirnseite 64 des Prioritätsschiebers 42 mit einer Kraft beaufschlagt, die der Kraft.der Druckfeder 66 entspricht, wird der Prioritätsschieber 42 gegen die Kraft der Feder 66 allmählich in Richtung der Arbeitsposition (b) verschoben, in der die Pumpe über den Zulaufraum 88 und die Ablaufsteuernut 114 mit dem Vorlaufraum .90 zur Versorgung des Verbrauchers verbunden ist (siehe Figur 3).

Wird die Zugfahrzeugbremse betätigt, steigt der Bremsdruck im Zugfahrzeug und dadurch der Druck am Steuereingang X des Druckbegrenzungsventils 4 an. Dadurch wird das Druckbegrenzungsventil 4 in Richtung seiner Schließstellung beaufschlagt und ein von dem Zugfahrzeugbremsdruck abhängiger Druckanstieg in dem Federraum 122 bewirkt. Durch den Druckaufbau im Federraum 122 wird der Bremsschieber 40 in Richtung seiner Arbeitsposition (b) verschoben und steuert über die von den Umfangswandungen der Radialbohrungen 126 gebildeten Steuerkanten die Verbindung von dem Halteraum 124 zu der Bremsanschlussbohrung 100 auf, so dass von der Pumpe gefördertes Druckmittel zu dem Anhängerbremssystem strömen kann, um einen Bremsdruck aufzubauen. In dieser Position des Bremsschiebers 40 sind die von den Abfräsungen 130, 132 gebildeten Kanäle über die Wandung 128 der Ventilbohrung 78 gesperrt. Wird bei betätigter Bremse ein vom Benutzer eingestellter, vom Beladezustand des Anhängers abhängiger maximaler Steuerdruck im Anhängerbremsventil 1 überschritten, wird das Maximaldruckbegrenzungsventil 6 aufgesteuert und die Steuerdruckdifferenz über den Rücklaufraum 98 zum Tank hin entspannt.

Offenbart ist ein Hydraulisches Anhängerbremsventil 1 zum Beaufschlagen einer Anhängerbremse mit einem Bremsdruck, mit einem Ventilgehäuse 76 in dessen Ventilbohrung 78 eine Bremsschieberanordnung 38 verschiebbar geführt ist, über die ein mit einer Druckmittelquelle verbundener Pumpenanschluss P mit einem Bremsanschluss B oder mit einem Verbraucheranschluss N und ein mit einer Druckmittelsenke verbundener Rücklaufanschluss R mit dem Bremsanschluss B verbindbar sind, wobei die Bremsschieberanordnung 38 in Abhängigkeit von einem Pilotdruck ansteuerbar ist. Erfindungsgemäß ist die Bremsschieberanordnung 38 in Richtung Verringerung des Bremsdrucks und Erhöhung des Bremsdrucks mit Steuerdrücken beaufschlagt, von denen der in Richtung Bremsdruckaufbau wirksame Steuerdruck durch ein Druckbegrenzungsventil 4 bestimmt ist, das in Schließrichtung von einem vom Zugfahrzeugbremsdruck abhängigen Pilotdruck beaufschlagt ist.

### Bezugszeichenliste

- 1: Anhängerbremsventil
- 2: Wegeventil
- 4: Druckbegrenzungsventil
- 6: Maximaldruckbegrenzungsventil
- 8: Pumpenleitung
- 10: Steuerkanal
- 12: Stromregelventil
- 14: Steuerdruckeingangsleitung
- 16: Feder
- 18: Steuerdruckentlastungsleitung
- 20: Druckbegrenzungsleitung
- 22: Feder
- 24: Steuerfläche
- 26: Steuerfläche
- 28: Steuerdruckleitung
- 30: Regelfeder
- 32.: Rücklaufleitung
- 34: Vorlaufleitung
- 36: Bremsleitung
- 38: Bremsschieberanordnung
- 40: Bremsschieber
- 42: Prioritätsschieber
- 44: Wegeventil
- 46: Verbindungskanal
- 48: Steuerkanal
- 50: Steuerfläche
- 52: Blende
- 54: Feder
- 56: Steuerverbindungsleitung
- 58: Steuerfläche
- 60: Blende
- 62: Steuerleitung
- 64: Steuerfläche
- 66: Druckfeder
- 68: Wegeventil
- 70: Steuerdruckverbindungsleitung
- 72: Steuerfläche
- 74: Blende
- 76: Ventilgehäuse
- 78: Ventilbohrung
- 80: Endabschnitt
- 82: Ansteuerkopf
- 84: Endabschnitt
- 86: Verschlussschraube
- 88: Zulaufraum
- 90: Vorlaufraum
- 92: Federraum
- 94: Rücklaufkanal
- 96: Rücklaufkanal
- 97: Steuerkante
- 98: Rücklaufraum
- 99: Bremsanschlussraum
- 100: Bremsanschlusskanal
- 102: Verschlussschraube
- 104: Sacklochbohrung
- 106: Radialbohrungsstern
- 108: Steuerkante
- 110: Steuerkante
- 112: Endabschnitt
- 114: Ablaufsteuernut
- 116: Endabschnitt
- 118: Halteabschnitt
- 120: Axialbohrung
- 122: Federraum
- 124: Haltebereich
- 126: Radialbohrung
- 128: Wandung
- 130: Abfräsung
- 132: Abfräsung
- 134: Ventilbuchse
- 136: Flansch
- 138: Anlageschulter
- 140: Drosselbohrung
- 142: Endabschnitt
- 144: Sitz
- 146: Schließkörper
- 148: Kolbensitz
- 150: Übersetzerkolben
- 152: Stirnfläche
- 154: Bohrungsstern
- 156: Verbindungsraum

## Patentansprüche

1. Hydraulisches Anhängerbremsventil (1) zum Beaufschlagen einer Anhängerbremse mit einem Bremsdruck, mit einem Ventilgehäuse (76) in dessen ventilbohrung (78) eine Bremsschieberanordnung (38) verschiebbar geführt ist, über die ein mit einer Druckmittelquelle verbundener Pumpenanschluss (P) mit einem Bremsanschluss (B) oder mit einem Verbraucheranschluss (N) und ein mit einer Druckmittelsenke verbundener Rücklaufanschluss (R) mit dem Bremsanschluss (B) verbindbar sind, wobei die Bremsschieberanordnung (38) in Abhängigkeit von einem Pilotdruck ansteuerbar ist, **dadurch gekennzeichnet, dass** die Bremsschieberanordnung (38) in Richtung Verringerung des Bremsdrucks und Erhöhung des Bremsdrucks mit Steuerdrücken beaufschlagt ist, von denen der in Richtung Bremsdruckaufbau wirksame Steuerdruck durch ein Druckbegrenzungsventil (4) bestimmt ist, das in Schließrichtung von einem vom Zugfahrzeugbremsdruck abhängigen Pilotdruck beaufschlagt ist.

2. Anhängerbremsventil nach Patentanspruch 1, wobei das Druckbegrenzungsventil (4) einen Schließkörper (146) aufweiset, der über einen Übersetzerkolben (150) in Schließrichtung vom Pilotdruck beaufschlagt ist.

3. Anhängerbremsventil nach Patentanspruch 2, wobei der Pilotdruck auf eine Stirnfläche (152) des Übersetzerkolbens (150) mit größerem Querschnitt als die Sitzfläche des Schließkörpers (146) wirkt.

4. Anhängerbremsventil nach einem der vorhergehenden Patentansprüche, wobei ein von der in Bremsdruckaufbaurichtung wirksamen Steuerfläche (24) der Bremsschieberanordnung (38) begrenzter Steuerraum über einen Steuerkanal (10) mit einer Pumpenleitung (8) verbunden ist, in dem zumindest ein Stromventil (12) angeordnet ist.

5. Anhängerbremsventil nach Patentanspruch 4, wobei das Stromventil (12) ein Stromregelventil ist

6. Anhängerbremsventil nach einem der vorhergehenden Patentansprüche, wobei ein von der in Bremsdruckabbaurichtung wirksamen Steuerfläche (26) der Bremsschieberanordnung (38) begrenzter Steuerraum vom Bremsdruck und der Kraft einer Regelfeder (30) beaufschlagt ist.

7. Anhängerbremsventil nach Patentanspruch 1, wobei die Bremsschieberanordnung (38) zweiteilig mit einem Bremsschieber (40) und einem Prioritätsschieber (42) zum bevorzugten Versorgen des Anhängerbremssystems mit Druckmittel ausgebildet ist.

8. Anhängerbremsventil nach Patentanspruch 7, wobei über den Prioritätsschieber (42) die Druckmittelströmung von dem Pumpenanschluss (P) zu dem Verbraucheranschluss (N) und/oder zu einem Verbindungskanal (46) steuerbar ist und über den Bremsschieber (40) ein Bremsanschluss (B) zum Bremsdruckaufbau mit dem Verbindungskanal (46) oder zum Bremsdruckabbau mit dem Rücklaufanschluss (R) verbindbar ist.

9. Anhängerbremsventil nach einem der Patentansprüche 7 bis 8, wobei der Prioritätsschieber (42) in Richtung Aufsteuern der Verbindung vom Pumpenanschluss (P) zum Verbraucheranschluss (N) und der Bremsschieber (40) in Richtung Verbindung Bremsdruckanschluss (B) mit dem Rücklaufanschluss (R) durch den Druck im Verbindungskanal (46) beaufschlagt sind.

10. Anhängerbremsventil nach einem der Patentansprüche 7 bis 9, wobei ein von der in Bremsdruckaufbaurichtung wirksamen Steuerfläche (58) des Prioritätsschiebers begrenzter Steuerraum über eine Steuerverbindungsleitung (56) vom Bremsdruck und der Kraft einer Druckfeder (66) beaufschlagt ist.

11. Anhängerbremsventil nach Patentanspruch 10, wobei in der Steuerverbindungsleitung (56) eine Blende (60) vorgesehen ist.

12. Anhängerbremsventil nach einem der Patentansprüche 7 bis 11, wobei ein von der in Bremsdruckaufbaurichtung wirksamen Steuerfläche (50) des Bremsschiebers (40) begrenzter Steuerraum über einen Steuerkanal (48) mit dem Verbindungskanal (46) verbunden und vom Druck im Steuerkanal (48) und der Kraft einer Feder (54) beaufschlagt ist.

13. Anhängerbremsventil nach Patentanspruch 12, wobei in dem Steuerkanal (48) eine Blende (52) vorgesehen ist.

14. Anhängerbremsventil nach einem der Patentansprüche 7 bis 13, wobei stromaufwärts des Bremsschieber (40) im Verbindungskanal (46) eine Blende (74) vorgesehen ist.

15. Anhängerbremsventil nach Patentanspruch 10 und 12, wobei die Federrate der Druckfeder (66) größer ist als die Federrate der Feder (54).

16. Anhängerbremsventil nach einem der vorhergehenden Patentansprüche, wobei der maximale Druck im Steuerkanal (48) durch ein Maximaldruckbegrenzungsventil (6) bestimmt ist.

17. Anhängerbremsventil nach Patentanspruch 16, wobei das Maximaldruckbegrenzungsventil (6) verstellbar ist und auf einen Begrenzungsdruck eingestellt ist, der größer als der Begrenzungsdruck des Druckbegrenzungsventils (4) ist.

18. Anhängerbremsventil nach einem der Patentansprüche 7 bis 17, wobei der Bremsschieber (40) coaxial zum Prioritätsschieber (42) in einem gemeinsamen Ventilgehäuse (76) angeordnet ist, in das das Druckbegrenzungsventil (4) und das Maximaldruckbegrenzungsventil (6) integriert sind.

## Claims

1. A hydraulic trailer brake valve (1) for pressurising a trailer brake with a brake pressure, having a valve housing (76) in whose valve bore (78) a brake spool arrangement (38) is guided in a displaceable manner, via which a pump port (P) communicating with a pressure medium source can be connected to a brake port (B) or a consumer port (N) and via which a return flow port (R) communicating with a pressure medium sump can be connected to the brake port (B), the brake spool arrangement (38) being controllable as a function of a pilot pressure, **characterized by** the fact that with the effect of decreasing the brake pressure and increasing the brake pressure the brake spool arrangement (38) is pressurized by control pressures, of which the control pressure acting with the effect of building up the brake pressure is determined by a pressure limiting valve (4) which is pressurized in the closing direction by a pilot pressure dependent upon the traction vehicle's brake pressure.

2. A trailer brake valve according to patent claim 1, wherein the pressure limiting valve (4) has a closing element (146) which is pressurized in the closing direction by the pilot pressure via an intensifier piston (150).

3. A trailer brake valve according to patent claim 2, wherein the pilot pressure acts on an end face (152) of the intensifier piston (150) with a cross-section larger than the seating area of the closing element (146).

4. A trailer brake valve according to any of the preceding patent claims, wherein a control space, which is limited by the control area (24) of the brake spool arrangement (38) acting with the effect of building up the brake pressure, communicates via a control duct (10) with a pump line (8) in which there is arranged at least one flow valve (12).

5. A trailer brake valve according to patent claim 4, wherein the flow valve (12) is a flow control valve.

6. A trailer brake valve according to any of the preceding patent claims, wherein a control space, which is limited by the control area (26) of the brake spool arrangement (38) acting with the effect of decreasing the brake pressure, is acted upon by the brake pressure and the force of a control spring (30).

7. A trailer brake valve according to patent claim 1, wherein the brake spool arrangement (38) is developed as a two-part arrangement with a brake spool (40) and a priority spool (42) for priority supply of the trailer brake system with pressure medium.

8. A trailer brake valve according to patent claim 7, wherein the priority spool (42) enables control of the pressure medium flow from the pump port (P) to the consumer port (N) and/or to a connecting duct (46), and wherein the brake spool (40) enables connection of a brake port (B) to the connecting duct (46) for building up the brake pressure or to the return flow port (R) for decreasing the brake pressure.

9. A trailer brake valve according to either of patent claims 7 or 8, wherein the pressure in the connecting duct (46) acts upon the priority spool (42) with the effect of opening the connection from the pump port (P) to the consumer port (N) and upon the brake spool (40) with the effect of establishing the connection between the brake pressure port (B) and the return flow port (R).

10. A trailer brake valve according to any of patent claims 7 to 9, wherein a control space, which is limited by the control area (58) of the priority spool (42) acting with the effect of building up the brake pressure, is acted upon via a control connection line (56) by the brake pressure and the force of a compression spring (66).

11. A trailer brake valve according to patent claim 10, wherein a metering orifice (60) is provided in the control connection line (56).

12. A trailer brake valve according to any of patent claims 7 to 11, wherein a control space, which is limited by the control area (50) of the brake spool (40) acting with the effect of increasing the brake pressure, communicates with the connecting duct (46) via a control duct (48) and is acted upon by the pressure in the control duct (48) and the force of a spring (54).

13. A trailer brake valve according to patent claim 12, wherein a metering orifice (52) is provided in the control duct (48).

14. A trailer brake valve according to any of patent claims 7 to 13, wherein a metering orifice (74) is provided upstream of the brake spool (40) in the connecting duct (46).

15. A trailer brake valve according to patent claims 10 and 12, wherein the spring constant of the compression spring (66) is larger than the spring constant of the spring (54).

16. A trailer brake valve according to any of the preceding patent claims, wherein the maximum pressure in the control duct (48) is determined by a maximum pressure limiting valve (6).

17. A trailer brake valve according to patent claim 16, wherein the maximum pressure limiting valve (6) is adjustable and is set to a limiting pressure which is higher than the limiting pressure of the pressure limiting valve (4).

18. A trailer brake valve according to any of patent claims 7 to 17, wherein the brake spool (40) is arranged coaxially with the priority spool (42) in a common valve housing (76) in which the pressure limiting valve (4) and the maximum pressure limiting valve (6) are integrated.

## Revendications

1. Valve (1) hydraulique de freinage de remorque, prévue pour soumettre un frein de remorque à une pression de freinage, dotée d'un corps (76) de valve, dans l'alésage (78) de valve duquel est guidé, de façon à lui permettre de coulisser, un dispositif de tiroir (38) de freinage, qui permet de raccorder un raccord (P) de pompe relié à une source de fluide de pression avec un raccord (B) de freinage ou avec un raccord (N) de récepteur et qui permet de raccorder un raccord (R) de retour relié à une évacuation de fluide de pression avec le raccord (B) de freinage, cependant que le dispositif de tiroir (38) de freinage peut être commandé en fonction d'une pression de pilotage,
**caractérisée en ce que**,
dans les sens d'une réduction de la pression de freinage et d'une augmentation de la pression de freinage, le dispositif de tiroir (38) de freinage est soumis à des pressions de commande, desquelles la pression de commande agissant dans le sens d'une augmentation de la pression de freinage est déterminée par une valve (4) de limitation de pression, qui dans le sens de la fermeture est soumise à une pression de pilotage dépendant de la pression de freinage d'un véhicule tracteur.

2. Valve de freinage de remorque selon la revendication de brevet n°1, cependant que la valve (4) de limitation de pression présente un corps (146) de fermeture, qui est soumis à la pression de pilotage dans le sens de la fermeture, par le biais d'un tiroir (150) multiplicateur.

3. Valve de freinage de remorque selon la revendication de brevet n° 2, cependant que la pression de pilotage agit sur une face (152) du tiroir (150) multiplicateur, dont la section transversale est supérieure à la surface de siège du corps (146) de fermeture.

4. Valve de freinage de remorque selon une des revendications de brevet précédentes, cependant qu'une conduite (10) de commande raccorde une chambre de commande, qui est limitée par la surface (24) de commande du dispositif de tiroir (38) de freinage agissant dans le sens de l'augmentation de la pression de freinage, à une conduite (8) de pompe, dans laquelle est disposée au moins une valve (12) de débit.

5. Valve de freinage de remorque selon la revendication de brevet n° 4, cependant que la valve (12) de débit est une valve de régulation de débit.

6. Valve de freinage de remorque selon une des revendications de brevet précédentes, cependant qu'une chambre de commande, qui est limitée par la surface (26) de commande du dispositif de tiroir (38) de freinage agissant dans le sens d'une réduction de la pression de freinage, est soumise à la pression de freinage et à la force exercée par un ressort (30) de réglage.

7. Valve de freinage de remorque selon la revendication de brevet n° 1, cependant que le dispositif de tiroir (38) de freinage est conçu en deux parties avec un tiroir (40) de freinage et un tiroir (42) de priorité, qui permet d'alimenter de façon prioritaire le système de freinage de remorque avec du fluide de pression.

8. Valve de freinage de remorque selon la revendication de brevet n° 7, cependant que le tiroir (42) de priorité permet de commander le flux de fluide de pression du raccord (P) de pompe vers le raccord (N) du récepteur et/ou vers une conduite (46) de raccordement et le tiroir (40) de freinage permet de relier un raccord (B) de freinage à la conduite (46) de raccordement pour augmenter la pression de freinage ou au raccord (R) de retour pour réduire la pression de freinage.

9. Valve de freinage de remorque selon une des revendications de brevet n° 7 à 8, cependant que la pression qui règne dans la conduite (46) de raccordement sollicite le tiroir (42) de priorité dans le sens de l'ouverture de la liaison du raccord (P) de pompe vers le raccord (N) du récepteur et sollicite le tiroir (40) de freinage dans le sens du raccordement du raccord (B) de pression de freinage au raccord (R) de retour.

10. Valve de freinage de remorque selon une des revendications de brevet n° 7 à 9, cependant qu'une chambre de commande, qui est limitée par la surface (58) de commande du tiroir (42) de priorité agissant dans le sens d'une augmentation de la pression de freinage, est soumise à la pression de freinage, au travers d'une conduite (56) de raccordement de commande, et à la force exercée par un ressort (66) de pression.

11. Valve de freinage de remorque selon la revendication de brevet n° 10, cependant qu'un orifice (60) d'étranglement est prévu dans la conduite (56) de raccordement de commande.

12. Valve de freinage de remorque selon une des revendications de brevet n° 7 à 11, cependant qu'une chambre de commande, qui est limitée par la surface (50) de commande du tiroir (40) de freinage agissant dans le sens d'une augmentation de la pression de freinage, est reliée à la conduite (46) de raccordement par une conduite (48) de commande et soumise à la pression régnant dans la conduite (48) de commande et à la force exercée par un ressort (54).

13. Valve de freinage de remorque selon la revendication de brevet n° 12, cependant qu'un orifice (52) d'étranglement est prévu dans la conduite (48) de commande.

14. Valve de freinage de remorque selon une des revendications de brevet n° 7 à 13, cependant qu'un orifice (74) d'étranglement est prévu dans la conduite (46) de raccordement, en amont du tiroir (40) de freinage.

15. Valve de freinage de remorque selon les revendications de brevet n° 10 et n° 12, cependant que le coefficient du ressort (66) de pression est supérieur au coefficient du ressort (54).

16. Valve de freinage de remorque selon une des revendications de brevet précédentes, cependant que la pression maximale régnant dans la conduite (48) de commande est déterminée par une valve (6) de limitation de la pression maximale.

17. Valve de freinage de remorque selon la revendication de brevet n° 16, cependant que la valve (6) de limitation de la pression maximale est réglable et calibrée sur une pression limite, qui est supérieure à la pression limite de la valve (4) de limitation de pression.

18. Valve de freinage de remorque selon une des revendications de brevet n° 7 à 17, cependant que le tiroir (40) de freinage est disposé de façon coaxiale par rapport au tiroir (42) de priorité dans un corps (76) de valve commun, dans lequel sont intégrées la valve (4) de limitation de pression et la valve (6) de limitation de la pression maximale.
